# EUROPEAN PATENT SPECIFICATION

(11) **EP 0 681 132 B1**
(45) Date of publication and mention of the grant of the patent: **15.12.1999**
(21) Application number: 95104022.9
(22) Date of filing: 18.03.1995
(51) Int. Cl.: F16L 3/10, F16L 3/22

(54) **A device for attachment of cables**
Befestigungsvorrichtung für Kabel
Dispositif pour le maintien de câbles

(30) Priority: 28.03.1994 SE 9401033
(43) Date of publication of application: 08.11.1995
(73) Proprietor: ASEA BROWN BOVERI AB, 721 83 Västeras (SE)
(72) Inventor: Sandberg,Bengt, S-734 91 Hallstahammar (SE)
(74) Representative: Boecker, Joachim, Dr.-Ing.

(56) References cited:
- EP-A- 0 368 445
- WO-A-90/05870
- DE-A- 2 517 745
- GB-A- 2 099 103
- US-A- 2 366 041
- US-A- 3 582 029

## Description

### TECHNICAL FIELD

The present invention relates to a device for attachment of cables according to the precharacterising part of claim 1. The device is preferably intended for fixing a movable cable assembly.

### BACKGROUND ART

A cable assembly, for example a cable assembly for an industrial robot, often comprises power cables and signal cables, preferably in the form of a number of round cables which comprise a plurality of insulated conductors enclosed in a sheath. The cables are fixed to the parts of the robot in order to make the cable assembly flexible in such a way that the mobility of the robot is not limited. It is known to fix the cables with a joint, with which the cables are clamped between two parts, for example between a yoke and a support or between two plates with slots for each cable dimension in question. Because of manufacturing tolerances, the cables may have different diameters, and therefore some cables in such a joint become heavily clamped whereas others are completely loose. It has been found that this type of attachment often leads to the occurrence of cable breakdown at or near the attachment.

When a cable consisting of a number of parallel conductors enclosed within a sheath is bent, tensile stresses arise in those conductors which are located at the radially outer side of the bent portion and compressive stresses arise in those conductors which are located at the radially inner side of the bent portion. If a cable is subjected to a large number of such bending operations, fatigue arises in the conductor material which inevitably leads to cable breakdown. To avoid the occurrence of such tensile and compressive stresses during bending, the conductors are laid in a spiral inside the sheath. Provided that the conductors may move in their longitudinal direction in relation to each other, no compressive or tensile stresses of the individual conductors arise when such a cable is bent. Instead, the conductors move relative to each other such that they all form the same bending radius during the bending. At the cross section of each individual conductor, however, bending stresses arise. However, these bending stresses seldom lead to material breakdown if the cross section of the conductor is small and the bending radius is made sufficiently large. The cross section area can thereby be made small by dividing the conductor into cores, and the bending radius may be controlled by the choice of material for the sheath.

In a fixed attachment of such a cable, the enclosed conductors are pressed together, whereby frictional forces prevent the individual conductors from moving relative to each other. At the attachment section, tensile and compressive forces, respectively, will therefore arise, which lead to fatigue breakdown of the conductors. Such a fixed attachment also constitutes a notch for repeated bending of the cable.

The cable cannot be bent naturally through the attachment, but is bent with a relatively small bending radius at the very entrance to the fixed attachment. This causes great bending stresses in the cross section of the conductors, resulting in fatigue of the conductor material. It has also proved that cable breakdown arises precisely at these fixed attachment points.

The EP-A-368 445 discloses an attachment apparatus used in a distributing frame for optical fibres. The attachment apparatus is meant to hold a plurality of thin cord each of which comprises only a single optical fibre or thin electrical wire. The attachment apparatus consists of a rectangular flat block of thermoplastic foam which comprises a plurality of parallel thin slots such that the foam block takes on a comb-like structure. This foam block is held in a correspondingly rigid comb-like metal cage which leaves uncovered said slots and the adjacent foam portions. The cords to be held have to be pushed from the side in the longitudinal direction of the slots to bring them into their final position. Thus, the grip on the cords is very poor and is unfit to keep the cords in place if they were subjected to external forces.

### SUMMARY OF THE INVENTION

The invention aims at providing a device for attachment of cables of the above-mentioned kind, which does not cause breakdowns of the cable conductors as described above.

To achieve this aim the invention suggests a device for attachment of cables according to the introductory part of claim 1, which is characterized by the features of the characterizing part of claim 1.

Further developments of the invention are characterized by the features of the additional claims.

The device for attachment of cables according to the invention is able to fix, for example an assembly of round cables with different diameters such that the attachment is so soft as to allow the conductors enclosed in the cables to move relative to each other in their longitudinal direction and so flexible as to prevent the occurrence of notches when the cables are bent.

The device according to the invention is especially suitable for the attachment of cables of different dimensions included in a movable cable assembly in an industrial robot.

The effect of the invention is achieved by clamping the cables between two elastic bodies, which develop sufficient friction to hold the cables, while simultaneously the holding force on the cable surfaces is so soft that the conductors can move inside the cable sheath. Both effects are attained independently of the cable dimension. The elastic bodies may suitably be made of cellular rubber and surrounded on all sides, except on the sides facing each other, by casings of a solid material with openings for cables of different dimensions. The openings should be of larger diameter than that of the cable in question.

### BRIEF DESCRIPTION OF THE DRAWINGS

The invention will now be described in greater detail by description of an embodiment with reference to the accompanying drawings, wherein
- Figure 1: shows an exploded view of an attachment device according to the invention, and
- Figure 2: shows the same device when installing a cable.

### DESCRIPTION OF THE PREFERRED EMBODIMENT

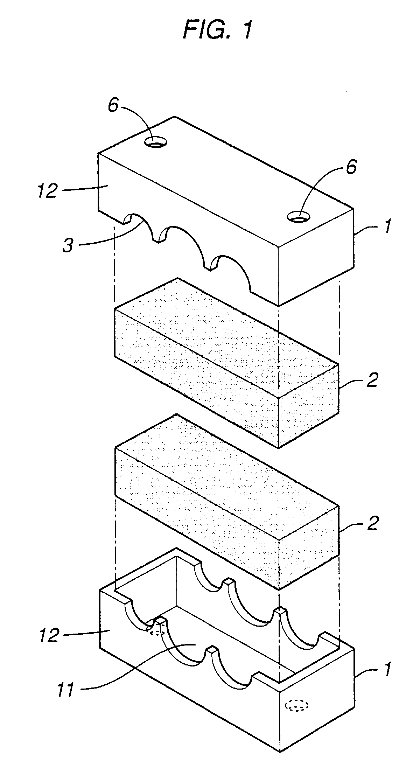

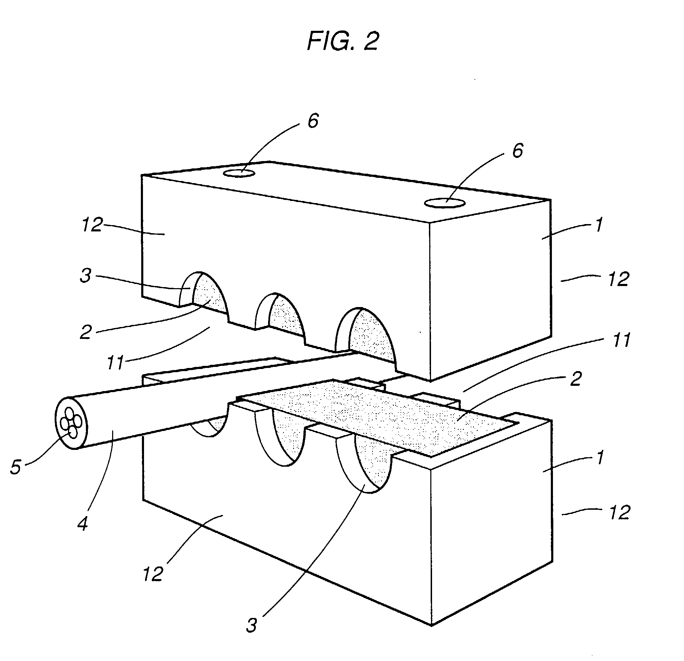

The attachment device shown in Figures 1 and 2 comprises two identical casings 1 facing each other with an elastic body 2 enclosed in each casing. Each one of the casings 1 consists of a hollow elongated parallelepiped with one open side 11. The elongated sides 12 nearest the opening 11 are provided with semicircular holes 3 which, when the casings 1 are joined together, form circular openings through which a cable 4 enclosing a plurality of conductors 5 may be passed. The elastic bodies accommodated within the casings extend entirely or almost up to the upper edge of the openings 11. They may also slightly extend beyond said upper edge. The casings 1 are fixed to each other and to a support (not shown), for example a robot arm, with screws through two holes 6. The elastic bodies 2 surrounded by the casings may suitably consist of cellular rubber with closed cells, for example chloroprene rubber. The casings 1 may suitably be made of die-cast plastic, and the diameters of the semicircular holes are somewhat larger than those of the cables.

When the casings 1 are brought together and surround the cable 4, the cellular rubber will form itself around the cable and surround the cable. Between the cellular rubber and the cable, such frictional forces are formed that the cable is fixed and yet can be guided or bent. However, the surface force applied to the cable is so soft that the conductors 5 enclosed within the sheath of the cable 4 are able to move relative to each other in their longitudinal direction, thus avoiding breakdown as described above. The attachment device is most suited for attachment of cable assemblies in industrial robots where the cables are subjected to a very large number of bending cycles.

## Claims

1. A device for attachment of cables (4) with conductors (5) enclosed therein, preferably for the attachment of at least two such cables (4), said device comprising two separate parts, an upper part and a lower part, the two parts being adapted to be connected to each other such as to hold said cables (4) clamped between them in their connected state,
**characterized** in that each said part consists
- of a casing (1) with one open side (11) and with openings (3) for cables on two opposite sides adjacent said open side (11)
- and an elastic body (2) accommodated in said casing (1) such that it extends entirely or almost up to the upper edge of the opening (11) of the casing or slightly beyond said upper edge,
and that, when the two casings with their elastic bodies (2) are joined together, the cable/cables is/are softly fixed between said bodies with such a surface force that, on the one hand, the cable (4) is fixed in its longitudinal direction, and, on the other hand, the conductors (5) enclosed within the cable are allowed to move relative to each other.

2. A device according to claim 1, **characterized** in that said cable openings (3), when joining the casings (1) together, form semicircular openings with a diameter somewhat larger than the diameter of the surrounded cable (4).

3. A device according to claim 1 or 2, **characterized** in that the casings (1) are die-cast or injection-moulded from polymeric material.

4. A device according to any of the preceding claims, **characterized** in that the casings (1) are identical in design.

5. A device according to any of the preceding claims, **characterized** in that the elastic bodies (2) consist of an elastomer, for example chloroprene rubber, with closed cells.

6. Use of a device according to any of the preceding claims for movable cable assemblies in industrial robots.

## Patentansprüche

1. Befestigungsvorrichtung für Kabel (4) mit darin eingeschlossenen Leitern (5), vorzugsweise zur Befestigung von mindestens zwei solcher Kabel (4), zu welcher Vorrichtung zwei separate Teile gehören, ein oberes Teil und ein unteres Teil, wobei die beiden Teile derart miteinander verbunden werden können, daß sie im miteinander verbundenen Zustand die genannten Kabel (4) zwischen sich einklemmen,
**dadurch gekennzeichnet,** daß jedes der genannten Teile besteht
- aus einem Kasten (1) mit einer offenen Seite (11) und mit Öfffnungen (3) für Kabel an zwei gegenüberliegenden Seiten an der offenen Seite (11)
- und aus einem elastischen Körper (2), der in dem genannten Kasten (1) derart untergebracht ist, daß er sich vollständig oder annähernd bis an den oberen Rand der Öffnung (11) des Kastens erstreckt oder leicht über den genannten oberen Rand hinausragt,
und daß, wenn die beiden Kästen mit ihren elastischen Körpern (2) miteinander verbunden werden, das Kabel/die Kabel sanft zwischen den genannten Körpern mit einer solchen Oberflächenkraft fixiert ist/sind, daß einerseits das Kabel (4) in seiner Längsrichtung fixiert ist und andererseits die in dem Kabel eingeschlossenen Leiter (5) sich relativ zueinander bewegen können.

2. Vorrichtung nach Anspruch 1, **dadurch gekennzeichnet,** daß die genannten Kabelöffnungen (3), wenn die Kästen (1) zusammengefügt sind, kreisförmige Öffnungen mit einem Durchmesser bilden, der etwas größer ist als der Durchmesser des umgebenen Kabels (4).

3. Vorrichtung nach Anspruch 1 oder 2, **dadurch gekennzeichnet,** daß die Kästen (1) aus druckgegossenem oder spritzgegossenem Polymermaterial bestehen.

4. Vorrichtung nach einem der vorhergehenden Ansprüche, **dadurch gekennzeichnet,** daß die Kästen (1) identischen Aufbau haben.

5. Vorrichtung nach einem der vorhergehenden Ansprüche, **dadurch gekennzeichnet,** daß die elastischen Körper (2) aus einem Elastomer, zum Beispiel Chloropren-Gummi, mit geschlossenen Zellen bestehen.

6. Verwendung einer Vorrichtung nach einem der vorhergehenden Ansprüche für bewegliche Kabelanordnungen an Industrierobotern.

## Revendications

1. Dispositif de maintien de câbles (4) ayant des conducteurs (5) qui y sont enfermés, de préférence pour le maintien d'au moins deux câbles (4) de ce genre, le dispositif comprenant deux parties distinctes, une partie supérieure et une partie inférieure, les deux parties étant aptes à être reliées l'une à l'autre de manière à maintenir les câbles (4) serrés entre elles lorsqu'elles sont reliées,
caractérisé en ce que chaque partie consiste
- en une boîte (1) ayant un côté (11) ouvert et en ouvertures (3) pour des câbles sur deux côtés opposés adjacents au côté (11) ouvert,
- en une pièce (2) élastique logée dans la boîte (1) de manière qu'elle s'étende entièrement ou presque jusqu'au bord supérieur de l'ouverture (11) ou légèrement au-delà du bord supérieur,
et en ce que lorsque les deux boîtes avec leur pièce (2) élastique sont réunies, le câble ou les câbles est ou sont fixé(s) de manière douce entre les pièces avec une force en surface telle que d'une part le câble (4) est fixé dans sa direction longitudinale et que d'autre part les conducteurs (5) qui sont enfermés dans le câble peuvent se mouvoir les uns par rapport aux autres.

2. Dispositif suivant la revendication 1, caractérisé en ce que les ouvertures (3) pour les câbles forment, lorsque les boîtes (1) sont reliées entre elles, des ouvertures circulaires d'un diamètre quelque peu plus grand que le diamètre du câble (4) qui est entouré.

3. Dispositif suivant la revendication 1 ou 2, caractérisé en ce que les boîtes (1) sont moulées par compression ou moulées par injection en une matière polymère.

4. Dispositif suivant l'une quelconque des revendications précédentes, caractérisé en ce que les boîtes (1) ont une forme identique.

5. Dispositif suivant l'une quelconque des revendications précédentes, caractérisé en ce que les pièces (2) élastiques consistent en un élastomère, par exemple en caoutchouc au chloroprène, à cellules fermées.

6. Utilisation d'un dispositif suivant l'une quelconque des revendications précédentes pour des ensembles mobiles de câbles dans les robots industriels.
